# FASCICULE DE BREVET EUROPEEN

(11) **EP 1 737 605 B1**
(45) Date de publication et mention de la délivrance du brevet: **26.11.2008**
(21) Numéro de dépôt: 05753746.6
(22) Date de dépôt: 08.04.2005
(51) Int. Cl.: B23K 26/08, B23K 26/14, B23K 26/36, B23K 37/02

(54) **MACHINE OUTIL DU TYPE PRESSE A ESTAMPER AVEC DISPOSITIF DE DECOUPE AU LASER POUR DETOURER, AJOUTER, POINCONNER OU SIMILAIRE COMPRENANT UN SUPPORT POUR DEPLACER LE DISPOSITIF DE DECOUPE LASER DU BATI DE LA MACHINE-OUTIL**
WERKZEUGSMASCHINE WIE STANZPRESSE MIT EINER LASERSCHNEIDEINRICHTUNG ZUM BESCHNEIDEN, ANBRINGEN UND STANZEN O.Ä. MIT STÜTZE FÜR DEN ABNEHMEN DER LASERSCHNEIDEINRICHTUNG VOM WERKZEUGMASCHINENBETT
MACHINE TOOL LIKE STAMPING MACHINE WITH A LASER CUTTING DEVICE FOR TRIMMING, ADDING, PUNCHING OR SIMILAR COMPRISING A SUPPORT FOR REMOVING THE LASER CUTTING DEVICE OF THE MACHINE TOOL BED

(30) Priorité: 08.04.2004 FR 0403699
(43) Date de publication de la demande: 03.01.2007
(73) Titulaire: 3D Industrie (SAS), 89460 Bazarnes (FR)
(72) Inventeur: DE JOANNIS DE VERCLOS, Benoît, F-89460 Bazarnes (FR); VRIGNAUD, Serge, F-89250 Hauterive (FR)
(74) Mandataire: Puiroux, Guy
(86) Numéro de dépôt international: PCT/FR2005/000858
(87) Numéro de publication internationale: WO 2005/102589

(56) Documents cités:
- EP-A- 0 008 773
- WO-A-20/04084423
- US-A- 3 597 578
- US-A- 4 700 044
- US-A- 5 090 329
- US-A- 5 525 776
- US-A- 6 060 686
- PATENT ABSTRACTS OF JAPAN vol. 1996, no. 10, 31 octobre 1996 (1996-10-31) & JP 08 141771 A (MATSUSHITA ELECTRIC IND CO LTD), 4 juin 1996 (1996-06-04)
- PATENT ABSTRACTS OF JAPAN vol. 012, no. 157 (M-696), 13 mai 1988 (1988-05-13) & JP 62 275592 A (TOSHIBA CORP), 30 novembre 1987 (1987-11-30)

## Description

La présente invention concerne une machine-outil du type presse à estamper munie d'un dispositif de découpe au laser pour détourer, ajourer, poinçonner ou similaire une pièce de tôlerie emboutie obtenue par un outillage de presse conformément au preambule de la revendication 1 (voir, par example, EP_A_0008773).

Dans le domaine de l'emboutissage de pièces, on connaît bien des machines-outils appelées presse à estamper comportant un bâti et des porte-outils supérieur et/ou inférieur supportés par le bâti et logeant respectivement des estampes et/ou des matrices, lesdits porte-outils étant respectivement animés de mouvement de montée et de descente en direction verticale par tout moyen approprié. Les porte-outils supérieurs et inférieurs sont, par exemple, actionnés par une station de travail. Suivant la complexité de la pièce à obtenir, les lignes de production comprennent habituellement trois ou quatre machines-outils qui réalisent chacune les différentes opérations nécessaires à l'obtention de la pièce, telle que le détourage, l'ajourage ou le « fentage ».

Afin d'améliorer les capacités de ces machines-outils automatiques et procurer des trous de formes irrégulières ou larges dans la pièce, on a déjà imaginé d'équiper ces machines-outils de moyens de découpe à plasma ; néanmoins, de tels dispositifs de découpe à plasma présentent l'inconvénient de procurer de larges saignées, des bords de coupe grossiers et une déformation de la pièce due à la chaleur du plasma à proximité de la ligne de coupe.

Afin de remédier à ces inconvénients, on a déjà proposé de remplacer ces dispositifs de découpe à plasma par des dispositifs de découpe au laser. C'est le cas, par exemple, du brevet européen EP 0 008 773 concernant une presse à estamper avec une tête de coupe à rayon laser. La tête de coupe au laser est déplaçable verticalement et est supportée par un bras horizontal fixe par rapport au bâti, à la station de travail et à la partie stationnaire de la table de travail de la presse à estamper. La tête de coupe à laser est munie, dans sa partie inférieure, d'une pointe creuse et d'un dispositif optique de focalisation des rayons, ledit dispositif étant déplaçable en direction verticale avec la tête de coupe. La tête de coupe au laser est connectée par un guide optique à un générateur de rayons laser positionné dans un endroit éloigné du reste de la presse à estamper de telle manière que le générateur ne soit soumis à aucune vibration. Bien évidemment, la presse à estamper comprend un pupitre de commande permettant de commander alternativement une opération d'estampage et une opération de découpe au laser à partir des commandes automatiques centralisées sur la presse à estamper.

Ce type de machine-outil est particulièrement destiné à une production en grande série d'une pièce spécifique, de sorte qu'il présente l'inconvénient d'être difficilement adaptable à la production de pièces différentes.

L'un des buts de l'invention est donc de remédier à cet inconvénient en proposaht une machine-outil munie d'un dispositif de découpe au laser de conception simple et peu onéreuse et adaptable sur la machine-outil de type presse à estamper permettant d'adapter la découpe en fonction d'un modèle particulier de pièce et de son évolution.

A cet effet, et conformément, à l'invention, il est proposé une machine-outil de type presse à estamper comprenant un bâti, un porte-outil inférieur ou supérieur et un dispositif de découpe au laser pour détourer, ajourer, poinçonner ou similaire une pièce, ledit dispositif comprenant un générateur de faisceau laser, une fibre optique et une tête de découpe laser alimentée par la fibre optique connectée au générateur d'un faisceau laser et des moyens de commande de la tête de découpe laser indépendants et programmables remarquable en ce que la tête de découpe laser est solidaire d'un support amovible apte à être solidarisé sur le bâti ou le porte-outil inférieur ou supérieur d'un outillage de presse de ladite machine-outil pour être déplacée et positionnée en fonction des outillages de presse et des pièces à obtenir.

On comprend bien que contrairement aux dispositifs de l'art antérieur, où le dispositif de découpe laser est fixé au bâti de l'outillage de presse, le dispositif de découpe de la machine-outil suivant l'invention peut être déplacé et positionné successivement sur différents outillages de presse en fonction des pièces à obtenir.

Selon une caractéristique essentielle de la machine-outil suivant l'invention, les moyens de commande de la tête de coupe consistent en une carte électronique solidaire du support de ladite tête de découpe laser et comportant au moins des moyens de stockage, des moyens de traitement et des moyens de réception des données de découpe de la pièce qui sont transmises par un ordinateur de bureau du type PC ou par un second dispositif de découpe conforme à l'invention.

D'autres avantages et caractéristiques ressortiront mieux de la description qui va suivre de la machine-outil conforme à l'invention, donnée à titre d'exemple non limitatif, en référence aux dessins annexés sur lesquels :
- la figure 1 est une vue en perspective d'une machine-outil selon l'invention,
- la figure 2 est une vue en perspective du dispositif de découpe au laser.

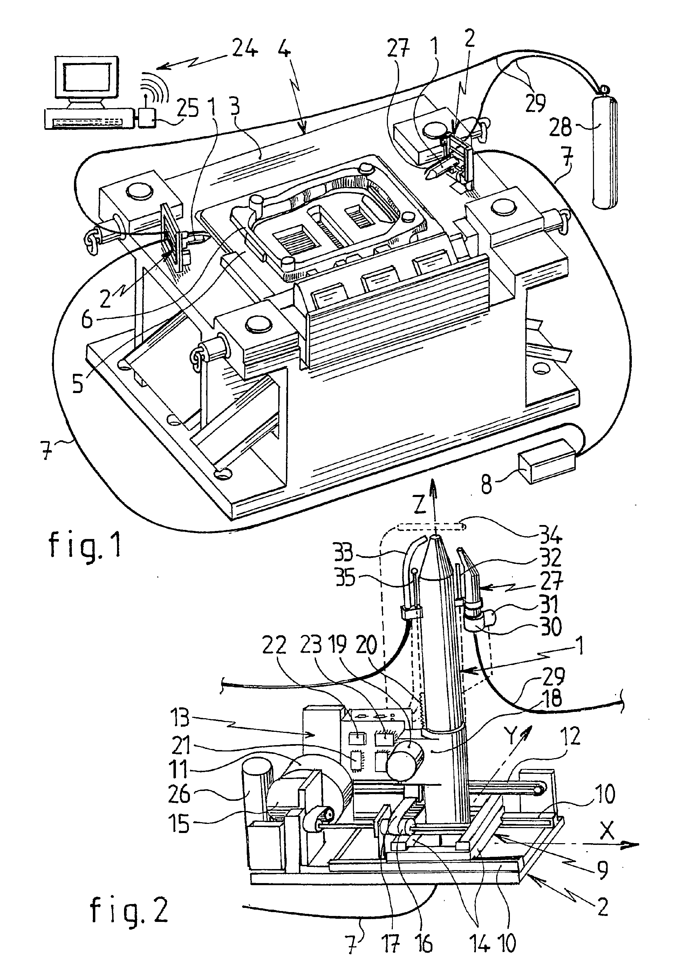

En référence à la figure 1, le dispositif de découpe au laser, associé la machine-outil 4 representant an combinaison la present invention, est constitué d'une tête de découpe laser 1 solidaire d'un support 2 amovible apte à être solidarisé sur le bâti 3 de ladite machine-outil 4 du type presse à estamper dont seul le porte-outil inférieur 5 muni d'une estampe 6 est représenté sur la figure 1. La tête de découpe laser 1 est alimentée par une fibre optique 7 connectée à un générateur d'un faisceau laser 8 positionné dans un endroit suffisamment éloigné de la presse à estamper afin d'empêcher que les vibrations de cette dernière ne soient transmises au générateur de faisceau laser 8, les vibrations étant susceptibles de perturber l'émission des faisceaux lasers et, par conséquent, de perturber la découpe au laser de la pièce. La fibre optique 7 est avantageusement protégée par une gaine en caoutchouc renforcée de trois à cinq couches de fil d'acier suivant la flexibilité nécessaire à la fibre optique 7. Par ailleurs, la fibre optique 7 est, de préférence, fixée à la tête de découpe laser 1 au moyen de connecteurs anti-arrachement, non représentés sur la figure 1.

Il est bien évident que le support amovible 2 sur lequel est fixée la tête de découpe laser 1 du dispositif de la machine-outil , peut-être positionné sur le porte-outil supérieur et/ou le porte-outil inférieur de la presse à estamper sans pour autant sortir du cadre de l'invention.

Le générateur de faisceau laser 8 consiste, par exemple, en une source laser à barreaux pompés par diode procurant un faisceau laser impulsionnel ou continu. La tête de découpe laser 1 est classiquement constituée d'une lentille de collimation, d'une lentille de focalisation et d'une buse de découpe permettant de concentrer en un seul point dit « point de'focalisation » le faisceau de rayons laser issu du générateur de faisceau laser et transmis à ladite tête de découpe 1 par la fibre optique 7. L'ensemble de l'énergie du faisceau de rayons laser 8 est concentrée sur le point de focalisation permettant ainsi la fusion puis la vaporisation de la matière en ce point.

Le support amovible 2 du dispositif de découpe laser, en référence à la figure 2, est constitué d'un chariot 9 sur lequel est monté la tête de découpe laser 1, ledit chariot 9 coulissant le long de deux rails parallèles 10 s'étendant suivant une première direction X. Le chariot 9 est déplacé suivant les rails 10 de direction X par un moteur électrique 11 entraînant en rotation à l'extrémité de son arbre de sortie un pignon denté coopérant avec une courroie crantée 12 afin d'entraîner en translation le chariot 9 le long desdits rails 10. Le moteur électrique 11 solidaire du support 2, est positionné à proximité des rails 10 du chariot 9 et il est piloté par des moyens de commande 13 qui pilotent également la tête de découpe laser 1 comme il sera détaillé plus loin.

Par ailleurs, le chariot 9 coulisse le long de seconds rails 14 s'étendant parallèlement suivant une direction Y orthogonale à la direction X des premiers rails 10, ledit chariot 9 étant entraîné le long de ces seconds rails 14 par un second moteur électrique 15 entraînant en rotation un pignon denté 16 et une courroie crantée 17. Ce second moteur électrique 15 est également solidaire du support 2, positionné à proximité des rails du chariot et piloté par les moyens de commande 13.

Afin de permettre la découpe de pièces en trois dimensions, le chariot 9 comprend avantageusement une potence 18 s'étendant orthogonalement aux rails 10, 14 suivant les axes X et respectivement Y et le long de laquelle la tête de découpe de laser 1 coulisse par des moyens d'actionnement solidaires du support 2 positionnés à proximité des rails 10, 14 du chariot 9 et pilotés par les moyens de commande 13. Ces moyens d'actionnement consistent, par exemple, en un troisième moteur électrique 19 piloté par les moyens de commande' 13 et coopérant avec une crémaillère 20.

Les moyens de commande 13 des moteurs électriques 11, 15, 19 d'entraînement du chariot 9 le long des différents axes X, Y et Z du dispositif de découpe consistent en une carte électronique solidaire du support 2 et comportant des moyens de stockage des données 21, des moyens de traitement des données 22 et des moyens de réception des données 23. On entend par données, les paramètres de la découpe de la pièce, à savoir la géométrie de la découpe, la position de la géométrie de la découpe par rapport au volume de la pièce, l'épaisseur de la matière, la présence ou l'absence d'un revêtement sur la pièce, la qualité de coupe, le déclenchement de la découpe par rapport au cycle de la presse à estamper et de la cinématique de l'outillage, etc.... Ces paramètres sont fournis par un ordinateur 24 du type PC muni d'un émetteur hertzien 25 qui transmet par ondes hertziennes lesdites données au récepteur hertzien formant les moyens de réception 23 des moyens de commande 13 qui stockent alors ces paramètres dans les moyens de stockage de données 21 de la carte électronique consistant en des composants électroniques de mémoire, lesdits paramètres étant alors traités par un processeur formant les moyens de traitement 22 qui pilotent alors la tête de découpe laser 1 et les différents moteurs électriques 11, 15, 19 du dispositif de découpe.

Il est bien évident que la transmission des données peut être effectuée entre l'ordinateur 24 et le dispositif de découpe suivant l'invention par un câble de communication tel qu'un câble RS 232, USB, IEEE 1394 ou parallèle dont les extrémités sont respectivement connectées à l'ordinateur 24 et à la carte électronique formant les moyens de commande 13 du dispositif.

De manière particulièrement avantageuse, les moyens de commande 13 comprennent des moyens d'émission 26 des données tels qu'un émetteur hertzien apte à transmettre les données correspondant aux paramètres de découpe de la pièce aux moyens de commande d'un second dispositif de découpe solidaire du bâti 3 de la même machine-outil ou d'une autre machine-outil.

Afin d'améliorer l'efficacité de la découpe laser, la machine-outil suivant l'invention, en référence aux figures 1 et 2 comprend une buse de projection 27 d'un gaz alimenté par une source de gaz 28 sous pression pilotée par les moyens de commande 13. La buse 27 est connectée à la source de gaz 28 comprimé par un tube flexible 29 qui consiste par exemple en une bouteille d'air comprimé. La buse de projection 27 du gaz sous pression est avantageusement conique et orientée en direction du point de focalisation de la tête de découpe laser 1 afin d'évacuer le métal vaporisé par le faisceau laser. Afin de permettre le réglage de la pression du gaz comprimé, le dispositif comprend avantageusement un obturateur mécanique 30 actionné par un micro-moteur 31 pas à pas piloté par les moyens de commande 13 qui adaptent la pression en fonction de la pression mesurée par un capteur de pression 32 positionné à proximité de ladite buse 27 et connecté aux moyens de commande 13.

Par ailleurs, afin d'empêcher tout dépôt de matière sur la tête de découpe laser 1, le dispositif comprend avantageusement une seconde buse 33 de projection d'air comprimé connectée à la source d'air comprimé 28, orientée en direction de la tête de découpe laser 1 et pilotée par les moyens de commande 13.

Selon une variante d'exécution, le dispositif peut comprendre avantageusement un obturateur mécanique 34, représenté en traits pointillés sur la figure 2, positionné à la sortie de la tête de découpe laser 1 entre cette dernière et la pièce à découper, et piloté par les moyens de commande 13 afin d'empêcher tout dépôt de matière sur ladite tête de découpe 1 lorsque cette dernière est positionnée sous la pièce à découper. Cet obturateur mécanique 34 est alors actionné par un micro-moteur piloté par les moyens de commande 13 connecté à un capteur de présence 35 de la pièce. Ainsi, le capteur de présence de la pièce à' découper permet'aux moyens de commande 13 de fermer l'obturateur mécanique 34 afin de protéger la tête de découpe 1 lorsque la pièce est évacuée soit par gravité soit par une assistance mécanique telle qu'un poussoir empêchant ainsi toute chute de déchets sur la tête de découpe 1 lors de l'évacuation de la pièce. On observera que ce capteur de présence 35, qui consiste, par exemple, en un capteur de pression différentiel, un capteur optique ou un capteur électronique, permet également aux moyens de commande 13 d'empêcher tout cycle de découpe au moyen de la tête de découpe laser 1 en l'absence d'une pièce dans la presse à estamper.

Conformément à l'invention, le dispositif de découpe laser peut être fixé de manière amovible sur une pièce fixe telle que le bâti ou sur une pièce mobile telle que le porte-outil inférieur et/ou le porte-outil supérieur de la machine outil par tous moyens appropriés tels que des goupilles, de la colle ou similaire.

De plus, il est bien évident que plusieurs dispositifs de découpe au laser peuvent être positionnés sur la machine outil selon l'invention, chacun des dispositifs étant apte à communiquer avec un ou plusieurs autres dispositifs voisins, ces derniers étant tous alimentés par le même générateur de faisceau laser 8.

Par ailleurs, le dispositif de la machine-outil peut avantageusement comprendre un boîtier de protection coiffant le support 2, la tête de découpe 1, le chariot 2, les moyens de commande 13, etc..., ledit boîtier comprenant un jour pour le passage de la tête de découpe 1 et des buses 27, 33.

Enfin, il va de soi que les exemples que l'on vient de donner ne sont que des illustrations particulières en aucun cas limitatives quant aux domaines d'application de l'invention telle que définie dans les revendications jointes.

## Revendications

1. Machine-outil (4) de type presse à estamper comprenant un bâti (3), un porte-outil (5) inférieur ou supérieur et un dispositif de découpe au laser pour detourer, ajourer, poinçonner ou similaire, une pièce, ledit dispositif comprenant un générateur de faisceau laser (8) et une tête de découpe laser (1) et des moyens de commande (13) de la tête de découpe laser (1) indépendants et programmables **caractérisée en ce que** ledit dispositif de découpe a laser comprend une fibre optique (7), **en ce que** la tête de découpe laser (1) est alimentée par la fibre optique (7) connectée an generateur de faiscean laser (8) est solidaire d'un support amovible (2) apte à être solidarisé de maniere amovible sur le bâti (3) ou le porte-outil (5) inférieur ou supérieur de ladite machine-outil (4) pour être déplacée et positionnée en fonction des outillages de presse et des pièces à obtenir, ledit support (2) étant solidarisé par tous moyens appropriés tels que des goupilles, de la colle ou similaire.

2. Machine-outil (4) suivant la revendication précédente **caractérisée en ce que** le support (2) comporte un chariot (9) portant la tête de découpe laser (1) et coulissant le long de rails (10, 14) s'étendant suivant au moins deux axes X et Y par des moyens d'actionnement (11, 15) solidaires du support (2), positionnés à proximité des rails (10, 14) du chariot (9) et pilotés par les moyens de commande (13).

3. Machine-outil (4) suivant la revendication 2 **caractérisée en ce que** la tête de découpe laser (1) coulisse le long d'une potence (18) s'étendant orthogonalement aux rails (10, 14) suivant les axes X et Y par des moyens d'actionnement (19) solidaires du support (2), positionnés à proximité des rails (10, 14) du chariot (9) et pilotés par les moyens de commande (13).

4. Machine-outil (4) suivant l'une quelconque des revendications précédentes **caractérisée en ce que** le support (2) comprend au moins un capteur (32, 35) connecté aux moyens de commande (13).

5. Machine-outil (4) suivant la revendication 4 **caractérisée en ce que** le capteur (35) consiste en un capteur de présence de la pièce de manière à interrompre le cycle de découpe en l'absence de pièce dans l'outillage de presse.

6. Machine-outil (4) suivant l'une quelconque des revendications précédentes **caractérisée en ce que** la fibre optique (7) est recouverte d'une gaine en caoutchouc.

7. Machine-outil (4) suivant l'une quelconque des revendications précédentes **caractérisée en ce que** les moyens de commande (13) consistent en une carte électronique comportant au moins des moyens de stockage (21), des moyens de traitement (22) et des moyens de réception (23) des données.

8. Machine-outil (4) suivant la revendication 7 **caractérisée en ce que** les moyens de commande (13) comprennent des moyens d'émission (26) de données aptes à transmettre des données au moyens de commande (13) d'un second dispositif de découpe.

9. Machine-outil (4) suivant l'une quelconque des revendications précédentes **caractérisée en ce que** le support (2) comprend une buse de projection (27) d'un gaz alimenté par une source de gaz sous pression (28) piloté par les moyens de commande (13).

10. Machine-outil (4) suivant la revendication 9 **caractérisée en ce que** le gaz consiste en de l'air comprimé.

11. Machine-outil (4) suivant l'une quelconque des revendications 9 ou 10 **caractérisée en ce que** la buse de projection est orientée en direction du point de focalisation de la tête de découpe laser (1) afin d'évacuer le métal vaporisé par le faisceau laser.

12. Machine-outil (4) suivant l'une quelconque des revendications précédentes **caractérisée en ce qu'**il comprend une seconde buse de projection (33) d'un gaz, alimentée par une source de gaz sous pression (28), pilotée par les moyens de commande (13) et orientée en direction de la tête de découpe laser (1) afin d'empêcher tout dépôt de matière sur ladite tête de découpe laser (1).

13. Machine-outil (4) suivant l'une quelconque des revendications 9 ou 10 **caractérisée en ce qu'**il comprend des moyens pour faire varier la pression du jet de gaz s'échappant de la première buse de projection (27).

14. Machine-outil (4)suivant l'une quelconque des revendications précédentes **caractérisée en ce qu'**il comprend un obturateur mécanique (34) positionné à la sortie de la tête de découpe laser (1), entre cette dernière et la pièce à découper, et piloté par les moyens de commande (13).

## Claims

1. Machine tool (4) of the stamping press type comprising a bed (3), an upper or lower tool holder (5) and a laser cutting device for trimming, adding, punching and similar a part, said device comprising a laser beam generator (8), and a laser cutting head (1) and independent and programmable control means (13) of the laser cutting head (1) **characterised in that** said laser cutting device comprises an optical fibre (7), **in that** the laser cutting head (1) and control means (13) of the laser cutting head (1) are supplied by an optical fibre (7) connected to the laser beam generator (8), and is fixed to a removable support (2) fixable to the bed (3) or the lower or upper tool holder (5) of said machine tool (4) to be displaced and positioned according to press tools and the parts to obtain, said support (2) being fixed using any appropriate means such as pins, glue or similar.

2. Machine tool (4) according to the preceding claim **characterised in that** the support (2) comprises a carriage (9) carrying the laser cutting head (1) and control means (13) of the laser cutting head (1) and sliding along the rails (10, 14) extending along at least two axes X and Y by means of actuating (11, 15) fixed to the support (2), located in the vicinity of the rails (10, 14) of the carriage (9) and driven par the control means (13).

3. Machine tool (4) according to claim 2 **characterised in that** the laser cutting head (1) and control means (13) of the laser cutting head (1) slide along an arm (18) extending orthogonally to the rails (10, 14) along the X and Y axes by means of actuating (19) fixed to the support; (2), located in the vicinity of the rails (10, 14) of the carriage (9) and driven by the control means (13).

4. Machine tool (4) according to any one of the preceding claims **characterised in that** the support (2) comprises at least one sensor (32, 35) connected to the control means (13).

5. Machine tool (4) according to claim 4 **characterised in that** the sensor (35) consists of a presence sensor of the part in such a way as to interrupt the cutting cycle in the absence of a part in the press tool.

6. Machine tool (4) according to any one of the preceding claims **characterised in that** the optical fibre (7) is covered with a rubber sheath.

7. Machine tool (4) according to any one of the preceding claims **characterised in that** the control means (13) consists of an electronic card comprising at least one means of storage (21), means of processing (22) and means of receiving (23) data.

8. Machine tool (4) according to claim 7 **characterised in that** the control means (13) include means of emitting (26) data able to transmit data to the control means (13) of a second cutting device.

9. Machine tool (4) according to any one of the preceding claims **characterised in that** the support (2) comprises a spray nozzle (27) of a gas supplied by a source of pressurised gas (28) driven by the control means (13).

10. Machine tool (4) according to claim 9 **characterised in that** the gas consists of compressed air.

11. Machine tool (4) according to any one of claims 9 or 10 **characterised in that** the spray nozzle is directed towards the focal point of the laser cutting head (1) and control means (13) of the laser cutting head (1) in order to evacuate the metal vaporised by the laser beam.

12. Machine tool (4) according to any one of the preceding claims **characterised in that** it comprises a second spray nozzle (33) of a gas, supplied by a source of pressurised gas (28), driven by the control means (13) and directed towards the laser cutting head (1) in order to prevent the depositing of any matter on said laser cutting head (1).

13. Machine tool (4) according to any one of claims 9 or 10 **characterised in that** it comprises means for varying the pressure of the stream of gas escaping from the first spray nozzle (27).

14. Machine tool (4) according to any one of the preceding claims **characterised in that** it comprises a mechanical seal (34) positioned at the output of the laser cutting head (1) and control means (13) of the laser cutting head (1), between the latter and the part to be cut, and driven by the control means (13).

## Patentansprüche

1. Werkzeugmaschine (4) vom Typ Stanzpresse, bestehend aus einem Rahmengestell (3), einem unteren oder oberen Werkzeughalter (5) und einer Laserschneidvorrichtung zum Ausschneiden, Durchbrechen, Lochen o.ä. eines Werkstücks, wobei die besagte Vorrichtung eine Laserstrahlenquelle (8) und einen Laserschneidkopf (1) sowie unabhängige und programmierbare Mittel (13) zum Steuern des Laserschneidkopfs (1) besitzt, **dadurch gekennzeichnet, dass** die besagte Laserschneidvorrichtung einen Lichtwellenleiter (7) besitzt, dass der Laserschneidkopf (1) mit dem an die Laserstrahlenquelle (8) angeschlossenen Lichtwellenleiter (7) versorgt wird und fest mit einer abnehmbaren Halterung (2) verbunden ist, die abnehmbar am Rahmengestell (3) oder am unteren oder oberen Werkzeughalter (5) der besagten Werkzeugmaschine (4) befestigt werden kann, um je nach den Stanzpresswerkzeugen und den zu fertigenden Werkstücken verlagert und positioniert werden kann, wobei die feste Verbindung der besagten Halterung (2) mit beliebigen geeigneten Mitteln wie Splinten, Klebstoff o.ä. erfolgen kann.

2. Werkzeugmaschine (4) nach dem vorhergehenden Anspruch, **dadurch gekennzeichnet, dass** die Halterung (2) einen Schlitten (9) besitzt, der den Laserschneidkopf (1) trägt und auf sich über mindestens zwei Achsen X und Y erstreckende Schienen (10, 14) durch fest mit der Halterung (2) verbundene Betätigungsmittel (11, 15) verschoben wird, die in der Nähe der Schienen (10, 14) des Schlittens (9) positioniert sind und mit Steuermitteln (13) gesteuert werden.

3. Werkzeugmaschine (4) nach Anspruch 2, **dadurch gekennzeichnet, dass** der Laserschneidkopf (1) durch fest mit der Halterung (2) verbundene Betätigungsmittel (19), die in der Nähe der Schienen (10, 14) des Schlittens (9) positioniert sind und mit Steuermitteln (13) gesteuert werden, an einem rechtwinklig zu den Schienen (10, 14) auf den Achsen X und Y verlaufenden Auslegerarm (18) entlang gleitet.

4. Werkzeugmaschine (4) nach einem der vorhergehenden Ansprüche, **dadurch gekennzeichnet, dass** die Halterung (2) mindestens einen an die Steuermittel (13) angeschlossenen Sensor (32, 35) besitzt.

5. Werkzeugmaschine (4) nach Anspruch 4, **dadurch gekennzeichnet, dass** der Sensor (35) aus einem Werkstückdetektor besteht, mit: dem der Stanzzyklus bei Abwesenheit eines Merkstücks in dem Stanzwerkzeug unterbrochen wird.

6. Werkzeugmaschine (4) nach einem der vorhergehenden Ansprüche, **dadurch gekennzeichnet, dass** der Lichtwellenleiter (7) mit einer Gummihülle verkleidet ist.

7. Werkzeugmaschine (4) nach einem der vorhergehenden Ansprüche, **dadurch gekennzeichnet, dass** die Steuermittel (13) aus einer Elektronikbaugruppe bestehen, die mindestens Mittel zur Datenspeicherung (21), Mittel zur Datenverarbeitung (22) und Mittel zum Datenempfang (23) besitzt.

8. Werkzeugmaschine (4) nach Anspruch 7, **dadurch gekennzeichnet, dass** die Steuermittel (13) Mittel zur Datenübertragung (26) besitzen, mit denen Daten an die Steuermittel (13) einer zweiten Laserschneidvorrichtung übertragen werden können.

9. Werkzeugmaschine (4) nach einem der vorhergehenden Ansprüche, **dadurch gekennzeichnet, dass** die Halterung (2) eine Blasdüse (27) zum Einblasen eines Gases besitzt, das von einer über die Steuermittel (13) gesteuerten Druckgasquelle (28) geliefert wird.

10. Werkzeugmaschine (4) nach Anspruch 9, **dadurch gekennzeichnet, dass** das Gas aus Druckluft besteht.

11. Werkzeugmaschine (4) nach Anspruch 9 oder 10, **dadurch gekennzeichnet, dass** die Blasdüse auf den Brennpunkt des Laserschneidkopfs (1) ausgerichtet ist, um das durch den Laserstrahl verdampfte Metall wegzublasen.

12. Werkzeugmaschine (4) nach einem der vorhergehenden Ansprüche, **dadurch gekennzeichnet, dass** sie eine zweite Blasdüse (33) zum Einblasen eines Gases besitzt, das von einer über die Steuermittel (13) gesteuerten Druckgasquelle (28) geliefert wird, wobei diese Blasdüse auf den Laserschneidkopf (1) ausgerichtet ist, um das Ablagern von Werkstoff auf dem besagten Laserschneidkopf (1) zu verhindern.

13. Werkzeugmaschine (4) nach Anspruch 9 oder 10, **dadurch gekennzeichnet, dass** sie Mittel zum Verändern des Drucks des aus der ersten Blasdüse (27) austretenden Gasstrahls besitzt.

14. Werkzeugmaschine (4) nach einem der vorhergehenden Ansprüche, **dadurch gekennzeichnet, dass** sie eine mechanische Verschließvorrichtung (34) besitzt, die am Austritt des Laserschneidkopfs (1) zwischen letzterem und dem zu bearbeitenden Werkstück angebracht ist und mit den Steuermitteln (13) gesteuert wird.
